# EUROPÄISCHE PATENTANMELDUNG

(11) **EP 2 098 812 A2**
(43) Veröffentlichungstag der Anmeldung: **09.09.2009**
(21) Anmeldenummer: 09153275.4
(22) Anmeldetag: 20.02.2009
(51) Int. Cl.: F28D 1/03

(54) **Flachheiz- oder -kühlkörper und Verfahren zur Herstellung eines Flachheiz- oder -kühlkörpers**

(30) Priorität: 06.03.2008 DE 102008002795
(71) Anmelder: G+R Heiz-/KühlSysteme GmbH, 93128 Regenstauf (DE)
(72) Erfinder: Winterstein, Jürgen, 93197, Zeitlarn (DE); Stöcklinger, Robert, 83620, Feldkirchen-Westerham (DE)
(74) Vertreter: Reichert, Werner Franz

(57) **Zusammenfassung**

Es ist ein Flachheiz- oder -kühlkörper (1) mit mindestens einer Frontplatte (10), die an einer ersten Kante (3) ein Vorlaufrohr (2) und an einer zweiten, gegenüberliegenden Kante (5) ein Rücklaufrohr (4) ausgebildet hat, die beide im wesentlichen einen rechteckigen Querschnitt besitzen, offenbart. Zwischen dem Vorlaufrohr (2) und dem Rücklaufrohr (4) ist eine wellenartig geformte Platte (20) eingesetzt, die jeweils gegenüberliegende Scheitel (21, 22) besitzt, die entsprechend einer Amplitude (A) beabstandet sind. Zwischen dem Vorlaufrohr (2) und dem Rücklaufrohr (4) sind parallele Verteilerkanäle (8) ausgebildet. Diejenigen Scheitel (21) der wellenartig geformten Platte (20), die der Frontplatte (10) gegenüberliegen, sind mit der Frontplatte (10) durch Punktschweißen verbunden, wobei die Amplitude (A) größer ist als ein lichter Abstand (H) der Wandung des Vorlauf- bzw. Rücklaufrohres (2, 4).

## Beschreibung

Die vorliegende Erfindung betrifft einen Flachheiz- oder - kühlkörper. Im Besonderen betrifft die Erfindung einen Flachheiz- oder -kühlkörper mit mindestens einer Frontplatte, die an einer ersten Kante ein Vorlaufrohr und an einer zweiten, gegenüberliegenden Kante, ein Rücklaufrohr ausgebildet hat. Sowohl das Rücklaufrohr, als auch das Vorlaufrohr haben einen im Wesentlichen rechteckigen Querschnitt. Zwischen dem Vorlaufrohr und dem Rücklaufrohr ist eine wellenartig geformte Platte eingesetzt, die jeweils gegenüberliegende Seiten besitzt, die mit einer Amplitude beabstandet sind. Zwischen dem Vorlaufrohr und dem Rücklaufrohr sind somit parallele Verteilerkanäle ausgebildet. Die wellenartig geformte Platte ist mit der Frontplatte verschweißt. Hierzu sind die der Frontplatte gegenüberliegenden Scheitelpunkte der wellenartig geformten Platte mit der Frontplatte durch Punktschweißen verbunden.

Ferner betrifft die Erfindung ein Verfahren zur Herstellung eines Flachheiz- oder -kühlkörpers.

Aus dem Deutschen Gebrauchsmuster DE 92 15 997 sind geschweißte Flachheizkörper bekannt, die plattenförmig mit planen Vorder- und Rückseiten ausgebildet sind und bei denen das durchströmende Wasser durch ein Vorlaufrohr zu und durch ein Rücklaufrohr abgeführt wird. Vorlauf- und Rücklaufrohr sind quadrat-, bzw. rechteckförmig im Querschnitt ausgebildet. Die Ausbildung des Vorlauf-, bzw. Rücklaufrohrs geschieht durch dreimaliges um 90 DEG durchgeführtes Umkanten der Endbegrenzung der Platte. Zwischen der Innenseite der Frontplatte bleibt ein kleiner Abstand, der somit den Wasserdurchfluss ermöglicht. Die Rückwand ist bündig mit der Außenwand des Vorlauf-, bzw. Rücklaufrohres angeordnet und verschweißt, so dass eine plane Rückwandfläche entsteht. Zwischen Rückwand und Vorderwand ist eine wellenförmige Zwischenplatte eingesetzt. Diese Zwischenplatte ist an den Scheitellinien der Wellungen sowohl mit der Rückwand, als auch der Vorderwand durch Schweißen befestigt.

Die Deutsche Patentschrift DE 199 47 928 offenbart einen Flachheiz- oder -kühlkörper mit parallel zueinander angeordneten Front- und/oder Rückplatten. An der oberen und der unteren Längskante sind Vorlaufrohre und Rücklaufrohre ausgebildet, die durch Abkanten der Längsrandteile einer Platte um mindestens dreimal 90 DEG ausgeformt sind. Zwischen den Vorlauf- und Rücklaufrohren verlaufen parallele Verteilerkanäle, die als ringförmige Erhebungen einer wellenartig geformten Zwischenplatte gebildet sind. Die Scheitelpunkte der wellenartig geformten Zwischenplatte sind mit der Front- und/oder Rückplatte durch Punktschweißen verbunden. Die beiden Querrohre sind nach innen offen und zusammen mit den jeweils einander zugewandten Endbegrenzungen der wellenartig geformten Zwischenplatte verschweißt. Der Scheitel der wellenförmigen Erhebungen der Zwischenplatte besitzt eine Höhe, die der lichten Innenhöhe der Vorlauf- und Rücklaufrohre entspricht, welche um die Dicke der Wandstärke der Front-, bzw. Rückplatte vermindert ist.

Aufgabe der Erfindung ist es, die Wärmeleistung eines Flachheiz- oder -kühlkörpers zu erhöhen, ohne dabei die Abmessungen des Flachheiz- oder -kühlkörpers wesentlich zu verändern.

Die obige Aufgabe wird durch einen Flachheiz- oder - kühlkörper gelöst, der die Merkmale des Anspruchs 1 umfasst.

Eine weitere Aufgabe der Erfindung ist, ein Verfahren zu schaffen, mit dem der erfindungsgemäße Flachheiz- oder - kühlkörper vereinfacht und mit besserer Fertigungsqualität hergestellt werden kann.

Die obige Aufgabe wird durch ein Verfahren gelöst, das die Merkmale des Anspruchs 8 umfasst.

Es ist von besonderem Vorteil, wenn der Flachheiz- oder - kühlkörper mit mindestens einer Frontplatte ausgestaltet ist, die an einer ersten Kante ein Vorlauf- und an einer zweiten, gegenüberliegenden Kante ein Rücklaufrohr ausgebildet hat. Das Vorlaufrohr und das Rücklaufrohr werden jeweils um dreimaliges 90 DEG ausgeführtes Umkanten der Endbegrenzungen der Frontplatte gebildet. Dabei weist das Rücklaufrohr und das Vorlaufrohr jeweils einen rechteckförmigen Querschnitt auf. Zwischen dem Vorlaufrohr und dem Rücklaufrohr ist eine wellenartig geformte Platte eingesetzt, die jeweils gegenüberliegende Scheitel besitzt, die entsprechend einer Amplitude A voneinander beabstandet sind. Ferner bildet die wellenartig geformte Platte zwischen dem Vorlaufrohr und dem Rücklaufrohr parallele Verteilerkanäle aus. Die wellenartig geformte Platte ist mit denjenigen Scheiteln, welche der Frontplatte gegenüberliegen, über Punktschweißen mit der Frontplatte verbunden. Die Amplitude der wellenartig geformten Platte ist größer, als ein lichter Abstand der Bandung des Vorlauf-, bzw. Rücklaufrohres.

Die durch jeweils dreimaliges Umkanten um 90 DEG gebildeten Vorlauf-, bzw. Rücklaufrohre sind nicht mit der Innenseite der Frontplatte verbunden. Das Vorlauf-, bzw. Rücklaufrohr wird, wie bereits erwähnt, durch dreimaliges Umkanten gebildet. Der Endbereich dieser Umkantung ist nicht mit der Innenseite der Frontplatte verschweißt. Es ist folglich ein geringer Abstand ausgebildet, durch den der Wasserdurchtritt möglich ist.

Es ist von besonderem produktionstechnischen Vorteil, wenn das Vorlauf-, bzw. Rücklaufrohr einen im Wesentlichen quadratischen Querschnitt aufweist.

Durch die Ausbildung des Vorlauf-, bzw. Rücklaufrohres und der zusätzlichen Abkantung der quer verlaufenden Seitenteile der Frontplatte entsteht eine Wanne. Das Vorlaufrohr und das Rücklaufrohr bilden eine obere und eine untere Begrenzung der Wanne. Die beiden, jeweils das Vorlaufrohr und das Rücklaufrohr verbindenden Kanten der Frontplatte sind aufgebogen und bilden somit die seitlichen Begrenzungen der Wanne. Die seitlichen Begrenzungen der Wanne und das Rücklaufrohr und Vorlaufrohr bilden somit eine Oberkante der Wanne.

Die wellenartig geformte Platte besitzt ebenfalls eine umlaufende Begrenzung. Diese umlaufende Begrenzung der wellenartig geformten Platte ist mit der umlaufenden Oberkante der Wanne umlaufend verschweißt.

Für Hygienezwecke kann in einer weiteren Ausführungsform der Flachheiz- oder -kühlkörper mit einer Rückplatte versehen sein. Diese Rückplatte ist mit den der Frontplatte abgewandten Scheitelpunkten der wellenartig geformten Platte ebenfalls durch Punktschweißen verbunden.

Die Rückplatte hat ebenfalls einen umlaufenden Rand ausgebildet. Dieser umlaufende Rand ist mit der äußeren umlaufenden Oberkante der Wanne der Frontplatte über eine umlaufende Schweißnaht verbunden.

Der Flachheiz- oder -kühlkörper, welcher mit einer Frontplatte und einer Rückplatte versehen ist, bildet somit zusammen mit der wellenartig geformten Platte parallele Verteilerkanäle aus. Im Gegensatz zu dem Flachheiz- oder - kühlkörper, der nur mit einer Frontplatte versehen ist, ist bei dem Flachheiz- oder -kühlkörper, der eine Front- und Rückplatte aufweist, die Anzahl der Verteilerkanäle verdoppelt. So bildet die wellenartig geformte Platte mit der Frontplatte einen ersten Satz von parallelen Verteilerkanälen aus. Ebenso bildet die Rückplatte zusammen mit der wellenartig geformten Platte einen zweiten Satz von parallelen Verteilerkanälen aus.

Das erfindungsgemäße Verfahren zur Herstellung eines Flachheiz- oder -kühlkörpers zeichnet dadurch aus, dass an einer ersten Kante einer Frontplatte, ein Vorlaufrohr und an einer zweiten, gegenüberliegenden Kante der Frontplatte ein Rücklaufrohr ausgebildet wird. Vorlaufrohr und Rücklaufrohr besitzen einem im Wesentlichen rechteckigen Querschnitt. Zwischen dem Vorlaufrohr und dem Rücklaufrohr wird eine wellenartig geformte Platte eingesetzt, die jeweils gegenüberliegende Scheitel besitzt, die entsprechend einer Amplitude beabstandet sind. Dadurch werden zwischen dem Vorlaufrohr und dem Rücklaufrohr parallele Verteilerkanäle ausgebildet.

Diejenigen Scheitel der wellenartig geformten Platte, die der Frontplatte gegenüberliegen, werden mit der Frontplatte durch Punktschweißen verbunden. Die Amplitude ist größer als ein lichter Abstand der Wandung des Vorlauf- bzw. Rücklaufrohres. Die wellenartig geformte Platte besitzt eine umlaufende Begrenzung, die durch eine Schweißnaht mit einer umlaufenden Oberkannte der Frontplatte verbunden wird.

Im Folgenden sollen Ausführungsbeispiele den erfindungsgemäßen Flachheiz- oder -kühlkörper und dessen Vorteile anhand der beigefügten Figuren näher erläutern.

Figur 1 zeigt eine schematische Rückansicht des Flachheiz-oder -kühlkörpers, der nur mit einer Frontplatte ausgebildet ist.

Figur 2 zeigt eine Schnittansicht entlang der Linie F1-F1 aus Figur 1.

Figur 3 zeigt eine Schnittansicht entlang der Linie F2-F2 aus Figur 1.

Figur 4 zeigt eine schematische Ansicht eines Flachheiz-oder -kühlkörpers, der sowohl mit einer Frontplatte, als auch einer Rückplatte versehen ist.

Figur 5 zeigt eine Schnittansicht entlang der in Figur 4 gezeigten Schnittlinie F1-F1.

Figur 6 zeigt eine Schnittansicht des Flachheiz- oder - kühlkörpers mit einer Frontplatte und einer Rückplatte, wobei der Schnitt entlang der in Figur 4 gezeigten Schnittlinie F2-F2 genommen worden ist.

Der Flachheiz-, bzw. -kühlkörper 1 weist ein Vorlaufrohr 2 und ein Rücklaufrohr 4 auf. Das Vorlaufrohr 2 und das Rücklaufrohr 4 werden jeweils durch dreimaliges Abkanten der ersten Kante 3, bzw. zweiten Kante 5 der Frontplatte 10 gebildet. Das so gebildete Vorlaufrohr 2 und das Rücklaufrohr 4 werden jeweils über eine ebenfalls aufgekantete zweite Kante 7 der Frontplatte miteinander verbunden. Durch die Ausformung des Vorlaufrohres 2 und des Rücklaufrohres 4, sowie der das Vorlaufrohr 2 und das Rücklaufrohr 4 jeweils verbindenden zweiten Kante 7 an den Enden der Frontplatte 10 wird somit eine Wanne gebildet. Diese Wanne weist eine bestimmte Höhe auf. In diese Wanne ist eine wellenartig geformte Platte 10 eingelegt. Diese wellenartig geformte Platte bildet mit der Frontplatte mehrere parallel verlaufende Verteilerkanäle 8 aus. Über die Verteilerkanäle 8 gelangt das aus dem Vorlaufrohr 2 austretende Wasser zu dem Rücklaufrohr 4. Die wellenartig geformte Platte ist an mehreren Scheitelpunkten mit der Frontplatte 10 durch Punktschweißen verbunden.

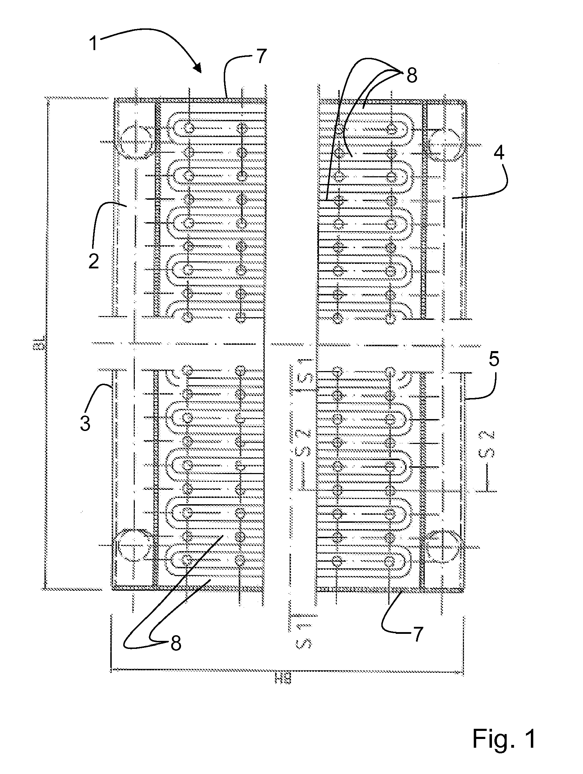

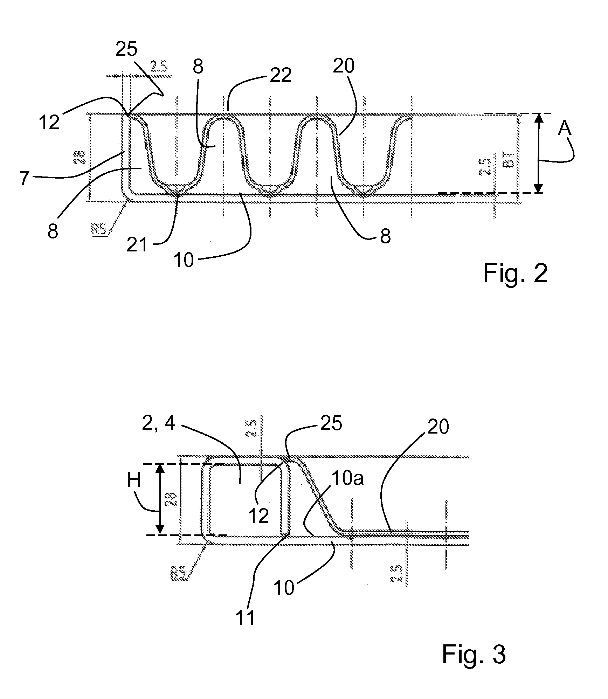

Figur 2 zeigt eine Ansicht des erfindungsgemäßen Flachheiz-oder -kühlkörpers entlang der in Figur 1 gezeigten Schnittlinie F1-F1. Es ist ein Teil der Frontplatte 10, mit der das Vorlaufrohr 2 und das Rücklaufrohr 4 verbindenden Kante 7 dargestellt. Ebenso ist die wellenartig geformte Platte 22 zu erkennen, die mit mehreren Scheitelpunkten 21, welche der Frontplatte gegenüberliegen, durch Punktschweißen verbunden ist. Ebenso besitzt die wellenartig geformte Platte 20 eine umlaufende Begrenzung 25, die mit der umlaufenden Oberkante 12 der Wanne verbunden ist. Die Verbindung der umlaufenden Begrenzung 25 der wellenartig geformten Platte mit der umlaufenden Oberkante 12 der Wanne geschieht durch eine ebenfalls umlaufende Schweißnaht. Die wellenartig geformte Platte 20 besitzt eine Amplitude A. Die Amplitude A der wellenartig ausgeformten Platte 20 kann dabei gleich oder größer sein, als der Abstand zwischen der Innenseite der Frontplatte und der Oberkante 12 der Wanne. In der hier dargestellten Ausführungsform bildet die wellenartig geformte Platte 20 mit der Frontplatte eine Vielzahl von parallelen Verteilerkanälen 8 aus.

Dadurch, dass die Amplitude A der wellenartig geformten Platte erhöht wird, welches durch eine tiefere Prägung erreicht wird, erhöht sich somit auch die Oberfläche der wellenartig ausgeformten Platte, was somit wiederum eine Erhöhung der Wärmeleistung bedingt.

Im Folgenden sollen explizit erwähnte Dimensionen die Erhöhung der Wärmeleistung verdeutlichen. Es ist für einen Fachmann selbstverständlich, dass die hier explizit erwähnten Dimensionen lediglich eine Möglichkeit für die Ausführung des erfindungsgemäßen Flachheiz- oder -kühlkörpers darstellen. Folglich soll dieses Zahlenbeispiel nicht als eine Beschränkung der Erfindung aufgefasst werden. Man erreicht eine Erhöhung der Wärmeleistung bei gleich bleibenden Außenabmessungen des Flachheiz- oder -kühlkörpers. Die Abmessungen des Flachheiz- oder -kühlkörpers haben eine Bautiefe BT von 28 mm, eine Bauhöhe BH von 230 mm und eine Baulänge BL von 1000 mm. Diese Bemaßungen kann man ebenfalls den Zeichnungen entnehmen. Die wellenartig geformte Platte 20 besitzt in der hier dargestellten Ausführungsform eine maximale Bautiefe von 28 mm. Diese Bautiefe berücksichtigt dabei die Blechstärke des Flachheiz- oder - kühlkörpers. Bei den oben erwähnten Abmessungen erreicht man in diesem Fall eine Oberflächenerhöhung der wellenartig geformten Platte von ca. 8 %. Bedingt durch diese größere Oberfläche steigt somit auch die Wärmeleistung des Flachheiz- oder -kühlkörpers um 8 %. Ein weiterer Vorteil dieser Konstruktion ist, dass die umlaufende Begrenzung 25 der wellenartig geformten Platte 20 mit der umlaufenden Oberkante 12 der Wanne verschweißt ist. Es ergibt sich somit eine um 2 mm erhöhte Kantenschiene. Dadurch wird die wärmeabgebende Oberfläche des Flachheiz- oder -kühlkörpers nochmals geringfügig erhöht. Ebenso erreicht man durch die Verschweißung der umlaufenden Begrenzung 25 der wellenartig geformten Platte 20 mit der umlaufenden Oberkante 12 der Wanne einen Fertigungsvorteil, da dadurch das Schweißverfahren vereinfacht ist. Ebenso erzielt man durch diese Ausgestaltung des erfindungsgemäßen Flachheiz- oder - kühlkörpers ein Produkt, dass Radien an den Außenkanten ausgebildet hat. Durch die Ausbildung der Radien ist die Verletzungsgefahr an den Heizkörpern reduziert und zusätzlich ist die Lackierung, bzw. Beschichtung des gesamten Flachheizkörpers wesentlich vereinfacht, so dass sich eine einheitliche Beschichtung ausbilden kann. Ebenso können die für die Verbindung erforderlichen Schweißnahtabmessungen auf ein Minimum reduziert werden.

Figur 3 zeigt eine Schnittansicht entlang der in Figur 1 gezeigten Linie F2-F2. Hier ist ein Vorlaufrohr oder ein Rücklaufrohr dargestellt, welches durch zweimaliges Abkanten der Seitenkante der Frontplatte 10 entsteht. Bei dem fertigen Vorlaufrohr 2, bzw. Rücklaufrohr 4 liegt die jeweilige obere Kante 3, bzw. untere Kante 5 der Frontplatte 10 direkt der Innenseite 10a der Frontplatte 10 gegenüber. Das Vorlaufrohr 2, bzw. das Rücklaufrohr 4 sind von der Innenseite 10a der Frontplatte 10 mit einem leichten Abstand 11 ausgebildet. Durch diesen Spalt, bzw. Abstand 11 kann somit das Wasser in die Verteilerkanäle eindringen. Ebenfalls ist in Figur 3 klar dargestellt, dass die wellenartig geformte Platte mit der umlaufenden Begrenzung 25 ebenfalls mit der umlaufenden Oberkante, bzw. hier mit der Oberseite des Rücklaufrohres, bzw. Vorlaufrohres 2 verbunden ist. Diese Verbindung wird, wie bereits mehrfach dargestellt, durch eine Schweißnaht hergestellt. Ebenso erkennt man, dass die Amplitude A der wellenartig geformten Platte 20 größer ist als der lichte Abstand H der Wandung des Vorlauf-, bzw. Rücklaufrohres 2 oder 4.

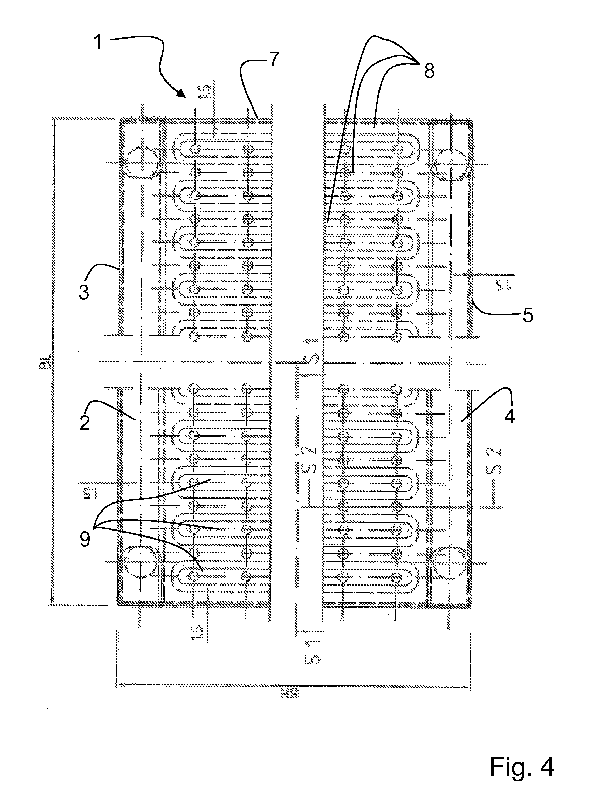

Figur 4 zeigt eine schematische Ansicht einer weiteren Ausführungsform des erfindungsgemäßen Flachheiz- oder - kühlkörpers 1. In dieser Ausführungsform ist der Flachheiz-oder -Kühlkörper 1 mit einer zusätzlichen Rückplatte 14 versehen.

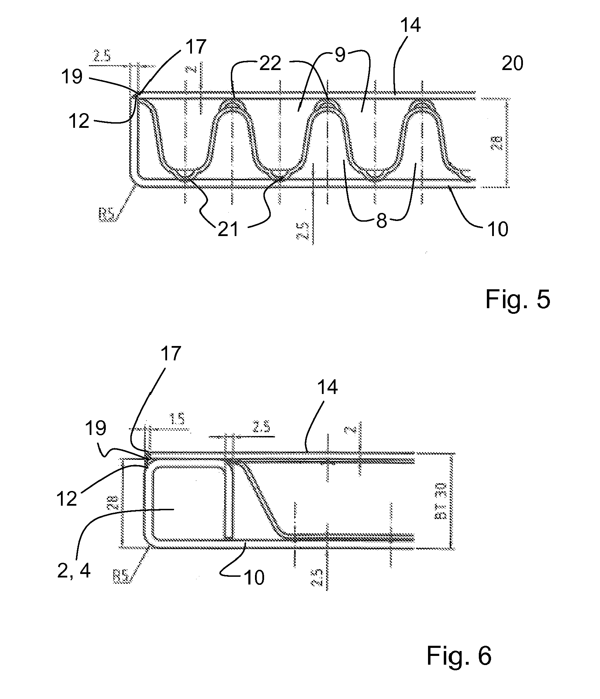

Das Vorhandensein der Rückplatte 14 und das Anbringen der Rückplatte 14 an den erfindungsgemäßen Flachheiz- oder - kühlkörper 1 ist am besten aus den Figuren 5 und 6 zu erkennen. Figur 5 zeigt eine schematische Ansicht entlang der in Figur 4 gezeigten Schnittlinie F1-F1. In die Wanne ist die wellenartig geformte Platte 20 eingesetzt. Die wellenartig geformte Platte 20 ist mit den Scheitelpunkten 21, welche der Frontplatte 10 gegenüberliegen, mit Punktschweißen verbunden. Ebenso sind die Scheitelpunkte 22, welche der Rückplatte 14 gegenüberliegen, ebenfalls mit Punktschweißen verbunden. Die Rückplatte 14 hat einen umlaufenden Rand 17 ausgebildet, der mit der umlaufenden Oberkante 12 der Wanne mit einer Schweißnaht 19 verbunden ist. Durch das Anbringen einer Rückplatte 14 erzielt man somit eine hermetische Abriegelung des gesamten Flachheiz- oder - kühlkörpers und man erhält somit komplett glatte Außenflächen, an denen sich kein Staub oder evtl. Keime festsetzen können. Dieser so ausgestaltete Flachheiz- und -kühlkörper 1 eignet sich besonders für die Verwendung in hygienekritischen Bereichen, wie z. B. Krankenhäusern. Ferner erreicht man mit dieser Ausführungsform ebenfalls eine Verdoppelung der Verteilerkanäle. So sind zwischen der Frontplatte 10 und der wellenartig geformten Platte 20 parallele Verteilerkanäle 8 ausgebildet. Zusätzlich sind zwischen der wellenartig geformten Platte 20 und der Rückplatte 40 ebenfalls parallel verlaufende Verteilerkanäle 9 ausgebildet.

Figur 6 zeigt eine Ansicht des erfindungsgemäßen Flachheiz-oder -kühlkörpers 1 entlang der Schnittlinie F2-F2 aus Figur 4. Die Rückplatte 14 liegt vollkommen auf der Oberkante des Vorlaufrohres 2, bzw. Rücklaufrohres 4 auf. Der umlaufende Rand 17 der Rückplatte 14 wird mit der Oberkante 12 der Wanne verbunden. Da die Schweißnaht zwischen der Rückplatte 14 und der Wanne im Bereich des Vorlaufrohres 2, bzw. des Rücklaufrohres 4 an deren jeweiligen Außenkanten angebracht wird, vereinfacht sich dabei ebenfalls der Herstellungsprozess, bzw. das Ziehen dieser Schweißnaht 19.

Wie aus der Darstellung in Figur 6 zu erkennen ist, bedeckt die Rückplatte 14 die gesamte Rückseite des Flachheiz- oder -kühlkörpers 1. Wie bereits erwähnt, erfolgt das Verschweißen an den Rändern der Rückplatte 14 und der Wanne, wobei die Schweißnähte in den Randverlauf eingebunden werden. Somit ergeben sich die gleichen Vorteile hinsichtlich der Verletzungsgefahr und der besseren Qualität der Lackierung des Flachheiz- oder -kühlkörpers.

Wie durch Figur 6 zu erkennen ist, erhöht sich durch das Aufbringen der Rückplatte 14 die Bautiefe des Flachheiz-oder -kühlkörpers von 28 mm auf 30 mm. Somit ergibt sich auch eine Erhöhung der Oberfläche des gesamten Flachheiz-und -kühlkörpers, was ebenfalls zu einer leichten Erhöhung der Wärmeleistung führt. In den hier gezeigten Abmessungen, welche nicht als Beschränkung der Erfindung aufgefasst werden können, ergibt sich somit eine Erhöhung der Wärmeleistung von ca. 1 % gegenüber den aus dem Stand der Technik bekannten Heizkörpern, welche sowohl mit einer Frontplatte, als auch mit einer Rückplatte versehen sind (siehe hierzu DE 199 47 928).

Die Erfindung wurde unter Berücksichtung bevorzugter Ausführungsbeispiele beschrieben. Es ist jedoch für einen Fachmann selbstverständlich, dass Abwandlungen und Änderungen durchgeführt werden können, ohne dabei den Schutzbereich der nachstehenden Ansprüche zu verlassen.

## Patentansprüche

1. Flachheiz- oder -kühlkörper (1) mit mindestens einer Frontplatte (10), die an einer ersten Kante (3) ein Vorlaufrohr (2) und an einer zweiten, gegenüberliegenden Kante (5) ein Rücklaufrohr (4) ausgebildet hat, die beide im wesentlichen einen rechteckigen Querschnitt besitzen, dass zwischen dem Vorlaufrohr (2) und dem Rücklaufrohr (4) eine wellenartig geformte Platte (20) eingesetzt ist, die jeweils gegenüberliegende Scheitel (21, 22) besitzt, die entsprechend einer Amplitude (A) beabstandet sind, wobei zwischen dem Vorlaufrohr (2) und dem Rücklaufrohr (4) parallele Verteilerkanäle (8) ausgebildet sind, und dass diejenigen Scheitel (21) der wellenartig geformten Platte (20), die der Frontplatte (10) gegenüberliegen, mit der Frontplatte (10) durch Punktschweißen verbunden sind, **dadurch gekennzeichnet, dass** die Amplitude (A) größer ist als ein lichter Abstand (H) der Wandung des Vorlauf- bzw. Rücklaufrohres (2, 4) und dass die wellenartig geformte Platte (20) eine umlaufende Begrenzung (25) definiert, die durch eine Schweißnaht mit einer umlaufenden Oberkannte (12) der Frontplatte (10) verbunden ist.

2. Flachheiz- oder -kühlkörper (1) nach Anspruch 1, **dadurch gekennzeichnet, dass** das Vorlauf- und Rücklaufrohr (2, 4) jeweils durch Abkanten der ersten Kante (3) und der zweiten Kante (5) der mindestens einen Frontplatte (10) um mindestens dreimal 90 DEG geformt ist.

3. Flachheiz- oder -kühlkörper (1) nach einem der Ansprüche 1 oder 2, **dadurch gekennzeichnet, dass** das Vorlauf- bzw. Rücklaufrohr (2, 4) einen im Wesentlichen quadratischen Querschnitt besitzt.

4. Flachheiz- oder -kühlkörper nach einem der Ansprüche 1 oder 3, **dadurch gekennzeichnet, dass** die Frontplatte (10) als Wanne ausgebildet ist, wobei das Vorlaufrohr (2) und das Rücklaufrohr (4) eine obere und untere Begrenzung der Wanne bilden und dass jeweils eine das Vorlaufrohr (2) und das Rücklaufrohr (4) verbindende Kante (7) der Frontplatte (10) aufgebogen ist und die seitliche Begrenzung der Wanne bildet, wodurch die umlaufende Oberkante (12) der Frontplatte (10) entsteht.

5. Flachheiz- oder -kühlkörper (1) nach einem der Ansprüche 1 bis 5**, dadurch gekennzeichnet, dass** eine Rückplatte (14) mit den der Frontplatte (10) abgewandeten Scheitelpunkten (22) der wellenartig geformten Platte (20) durch Punktschweißen verbunden ist.

6. Flachheiz- oder -kühlkörper (1) nach Anspruch 6, **dadurch gekennzeichnet, dass** ein umlaufender Rand (17) der Rückplatte (14) mit der äußeren umlaufenden Oberkante (12) der Wanne der Frontplatte (10) über eine umlaufende Schweißnaht (19) verbunden ist.

7. Flachheiz- oder -kühlkörper (1) nach Anspruch 6 und 7,
**dadurch gekennzeichnet, dass** zwischen der Frontplatte (10) und der wellenartig geformten Platte (20) die parallelen Verteilerkanäle (8) ausgebildet sind und dass zwischen der Rückplatte (14) und der wellenartig geformten Platte (20) ebenfalls mehrere parallele Verteilerkanäle (9) ausgebildet sind.

8. Verfahren zur Herstellung eines Flachheiz- oder - kühlkörpers (1) **gekennzeichnet durch** die folgenden Schritte:
• dass an einer ersten Kante (3)einer Frontplatte (10), ein Vorlaufrohr (2) und an einer zweiten, gegenüberliegenden Kante (5) der Frontplatte (10) ein Rücklaufrohr (4) ausgebildet wird, die beide im wesentlichen einen rechteckigen Querschnitt besitzen;
• dass zwischen dem Vorlaufrohr (2) und dem Rücklaufrohr (4) eine wellenartig geformte Platte (20) eingesetzt wird, die jeweils gegenüberliegende Scheitel (21, 22) besitzt, die entsprechend einer Amplitude (A) beabstandet sind, und dass damit zwischen dem Vorlaufrohr (2) und dem Rücklaufrohr (4) parallele Verteilerkanäle (8) ausgebildet werden;
• dass diejenigen Scheitel (21) der wellenartig geformten Platte (20), die der Frontplatte (10) gegenüberliegen, mit der Frontplatte (10) **durch** Punktschweißen verbunden werden; und
• dass die Amplitude (A) größer ist als ein lichter Abstand (H) der Wandung des Vorlauf- bzw. Rücklaufrohres (2, 4) und dass die wellenartig geformte Platte (20) eine umlaufende Begrenzung (25) besitzt, die **durch** eine Schweißnaht mit einer umlaufenden Oberkannte (12) der Frontplatte (10) verbunden wird.

9. Verfahren nach Anspruch 8, wobei das Vorlauf- und Rücklaufrohr (2, 4) jeweils durch Abkanten der ersten Kante (3) und der zweiten Kante (5) der mindestens einen Frontplatte (10) um mindestens dreimal 90 DEG geformt werden.

10. Verfahren nach Anspruch 8 und 9, wobei die Frontplatte (10) als Wanne ausgebildet ist, wobei jeweils eine das Vorlaufrohr (2) und das Rücklaufrohr (4) verbindende Kante (7) der Frontplatte (10) aufgebogen wird, so dass die seitliche Begrenzung der Wanne ausgebildet wird, wodurch die umlaufende Oberkante (12) der Frontplatte (10) gebildet wird.

11. Verfahren nach einem der Ansprüche 8 bis 10 wobei für Hygienezwecke der Flachheiz- oder -kühlkörper (1) mit einer Rückplatte (14) versehen wird, dass die Scheitelpunkte (22) der wellenartig geformten Platte (20), welche der Rückplatte (14) gegenüberliegen, mit dieser durch Punktschweißen verbunden werden.

12. Verfahren nach Anspruch 11, wobei ein umlaufender Rand (17) der Rückplatte (14) mit der umlaufenden Oberkante (12) der Wanne mit einer umlaufenden Schweißnaht (19) verbunden wird.

13. Verfahren nach den Ansprüchen 8 bis 12, wobei eine umlaufende Begrenzung (25) der wellenartig geformten Platte (20) mit der umlaufenden Oberkante (12) der Wanne derart mit einer umlaufenden Schweißnaht verbunden wird, dass Radien an den Außenkanten des Flachheiz- oder - kühlkörpers (1) ausgebildet werden.

14. Verfahren nach den Ansprüchen 8 bis 12, wobei eine umlaufende Begrenzung (25) der wellenartig geformten Platte (20) mit der umlaufenden Oberkante (12) der Wanne und dass die auf die gesamte Rückseite des Flachheiz- oder - kühlkörpers (1) aufgesetzte Rückplatte (14) durch eine umlaufende Schweißnaht in den Randverlauf des Flachheiz-oder -kühlkörpers (1)eingebunden werden und dass Radien an den Außenkanten des Flachheiz- oder -kühlkörpers (1) ausgebildet werden.
